# EUROPEAN PATENT APPLICATION

(11) **EP 1 881 089 A1**
(43) Date of publication of application: **23.01.2008**
(21) Application number: 07013273.3
(22) Date of filing: 06.07.2007
(51) Int. Cl.: C23C 30/00, F16L 15/04, E21B 17/042

(54) **Fasteners coated with boron nitride and means for securing fasteners**

(30) Priority: 17.07.2006 US 807528 P; 31.10.2006 US 554595
(71) Applicant: Momentive Performance Materials Inc., Wilton, CT 06897 (US)
(72) Inventor: Student, Joerg, 70563 Stuttgart (DE); Sun, Rickson, Palo Alto, CA 94301 (US); Yom-Tov, Opher, San Francisco, CA 94107 (US); Lelonis, Donald, Strongsville, OH 44149-2128 (US); Hans, Paul, Medina, OH 44256 (US); Marchiando, Robert, Twinsburg, OH 44087 (US); Klug, Jennifer, Strongsville, OH 44136 (US); Shaffer, Gregory, Strongsville, OH 44136 (US)
(74) Representative: Zinnecker, Armin

(57) **Abstract**

An anti-seizing composition that facilitates securing fasteners in an assembly, e.g., a nail that is driven by a hammer or a threaded nail or screw that is screwed into a coupling, a nut, or a building block, etc. In one embodiment, the composition comprises a sufficient amount of boron nitride, which upon application on the contact surface of the fastener, allows the fastener to be quickly secured without seizing and / or galling. The invention further relates to a method for securing fasteners in an assembly by applying an effective amount of boron nitride powder composition onto the contact surface of the fasteners, i.e., the pointed end or the threaded surface of the shank.

## Description

### CROSS-REFERENCE TO RELATED APPLICATIONS

This application claims the benefits of U.S. 60/807528 filed July 17, 2006, which patent application is fully incorporated herein by reference.

### FIELD OF THE INVENTION

The invention relates to a method for securing fasteners including nails and threaded fasteners, e.g., screws, threaded bolts, pipe joints with coupling threads, and the like, with a lubricating composition which leaves a coating layer containing boron nitride on the fasteners:

### BACKGROUND OF THE INVENTION

In the use of mechanical fasteners such as nails or screws, anti-seizing compositions or lubricants are sometimes used to make the job easier. In the process of securing a threaded screw with a torque wrench and without the application of an anti-seizing compound, the screw may rotate a few turns then freeze in place. Further application of the torque wrench does not necessarily help in turning the screw, and may just cause the screw to twist off-course and break. Therefore, anti-seize compositions are often used in the threading of mating mechanical fasteners, e.g., bolt and nut elements, prior to threadably engaging the respective fastener components with one another and tightening same to their final interlocked state.

U.S. Patent No. 3,652,414 discloses a formulation comprising finely divided copper powder in an oil-and-soap based composition. U.S. Patent No. 5,498,351 discloses an anti-seize lubricant composition comprising aluminum flake in an oil suspension, having a paste-like consistency and typically applied by dipping or brushing techniques. U.K. Patent Application No. GB 2 242 494 discloses the application of a non-waxy coating material onto the drill point of a screw to act as a lubricant in use. EP Publication No. 480103 discloses the use of a waxy material on the drill point of a screw to act as a lubricant during driving of the fastener. There are a number of commercial anti-seize products on the market, including compositions comprising a suspension of copper and graphite in a grease, which protects metal parts-from rust, corrosion, galling, and seizing at temperatures to 1800°F (982°C). There are also commercially available thermoplastic coating compositions for dip-coating fasteners, such as nails, to lubricate the nails at the shank point, making them easier to drive, as well as increasing their holding powder.

In practice, the oil, grease, thermoplastic, or petroleum-based anti-seize composition of the prior art often becomes fouled or commingled with metal flash, shards, and particulates, in the course of its use. There is often a temperature limitation to the prior art anti-seize composition for securing fasteners in a high temperature environment. Additionally, the couplings may develop excess friction or sticking of the nut threads during the final tightening or driving. The stickiness experienced during tightening is sometimes due to galling. Galling is a severe form of adhesive wear, which occurs when two metallic components slide against each other at relatively low speeds. With high loads, galling can cause surface damage characterized by localized material removal or transfer from the threaded fastener. The damage caused by galling may occur after just a few cycles of movement between the mating surfaces. Additionally, the stickiness experienced can give the operator tightening the nut the impression that the coupling is tight, when really, most of the torque being applied to the nut is going towards overcoming friction and not towards holding the coupling together tightly.

In the woodworking industry, a similar issue of screw or nail breakage occurs when fastening two or more boards together with a nail or screw type fastener. An example would be when building decking or walkways/boardwalks. This is especially common when using hardwoods, such as Ipe / ironwood, mahogany, teak, Brazilian cherry, rosewood, walnut, and Brazilian ebony, to name a few. In this case, the fastener binds with the wood material, causing a high torque load on the screw or the nail, resulting in twisting of the shank and breakage. Removing broken screws or bent nails results in decreased productivity.

There is a need for an anti-seize composition which will allow a fastener (such as smooth nails) to be driven quickly or easily, or to be turned smoothly (such as threaded screws or nails) without sticking, especially during final tightening. In one embodiment, the invention relates to a composition having anti-galling properties, as well as excellent coefficient of friction properties for coating / lubricating the shank end of fasteners. The invention also relates to a method of securing fasteners with relative ease by first coating the drill point or threaded portion of the fastener shank with a coating containing boron nitride powder.

### SUMMARY OF THE INVENTION

In one aspect of the present invention, an anti-seizing composition containing boron nitride for use in coating the shank surface of a fastener is disclosed, to minimize seizing as the fastener is screwed or driven into an assembly. The anti-seizing composition that contains boron nitride can be in the form of a paint / slurry, a gel, a grease, an oil, a solid stick or powder, a spray, or a suspension. The amount of boron nitride in the composition ranges from 0.1 to 99.9 wt. %, depending on the form used.

In another aspect, the invention relates to a fastener having a shank contact surface, with at least 20% of the length of the shank or threaded portion being coated with an anti-seizing composition containing 5 to 99.9 wt. % boron nitride, leaving a coating layer containing boron nitride on the contact surface of the fastener. In one example, the fastener is a threaded fastener having a threaded surface coated by the anti-seizing composition. In another example, the fastener is a nail having a pointed end coated by the anti-seizing composition.

Lastly, the invention further relates to a method for securing a fastener having a shank by applying a sufficient amount of a composition containing 5 to 99.9 wt. % boron nitride on the shank portion of the fastener, thus allowing the fastener to be assembled quickly and preventing the fastener from seizing when it is secured in an assembly.

### BRIEF DESCRIPTION OF THE DRAWINGS

Figure 1A is a diagram showing an assembly of one embodiment of a threaded fastener (a steel pipe with a threaded coupling) coated with the anti-seizing composition of the invention.

Figure 1B is a diagram showing a connection portion of a threaded joint of a steel pipe, wherein a coating of the anti-seizing composition of the invention is applied onto the threaded surface of the male connector.

Figure 2A is a side view of a threaded fastener in the form of a screw, wherein the threaded portion is partially coated with the anti-seizing composition of the invention.

Figure 2B is a side view of a different embodiment of a threaded screw partially coated with the anti-seizing composition.

### DESCRIPTION OF THE INVENTION

As used herein, approximating language may be applied to modify any quantitative representation that may vary, without resulting in a change in the basic function to which it is related. Accordingly, a value modified by a term or terms, such as "about" and "substantially," may not be limited to the precise value specified, in some cases.

As used herein, "shank" refers to the metal rod portion of a fastener, excluding the formed "head" and including the pointed end or a tip.

As used herein, "head" refers to the expanded head or portion for some embodiments of fasteners, which can be flat (giving a bigger target for the hammer) or countersunk (flat on top and slightly tapered on the bottom); smooth-faced or slightly "checkered" on top; cupped or slightly rounded; or duplex (with two heads, one above the other, making them easy to remove in temporary tasks like form building).

As used herein "nails" in either singular or plural form will be used interchangeably, referring to a fastening member having a pointed end or a tip (drill point). Examples include, but are not limited, to simple nails having a metal rod or shank, which is pointed at one end and a formed head at the other end; spiral shank nails (also called screw thread, Screw-Down® or "drive" nails) with spiral thread, which causes them to turn when they are driven like wood screws; rink shank nails (or Anchor-Down® nails), having an annular (or ring) thread on the nails for better holding power; fluted shank nails with horizontal threads to cut the masonry to minimize cracking and provide excellent holding power; and multi-pointed fasteners, typically referred to as staples.

As used herein, "threaded fastener" in either singular or plural form will be used interchangeably, referring to a fastening member (can be male or female) having a plurality of threads on the shank surface adapted for engagement with a mating fastener assembly. Examples include, but are not limited to, threaded screws, threaded nuts, threaded nails, etc. The term "threaded fastener" can also be used to refer to threaded joints on bikes, toys, electronic components, etc. and to threaded joints in steel pipes used for oil well drilling, etc. that need to come into intimate contact with another part to form a tight seal portion.

As used herein, "fastener" in either singular or plural form will be used interchangeably, referring to a fastening member in the form of a nail or a threaded fastener (male or female).

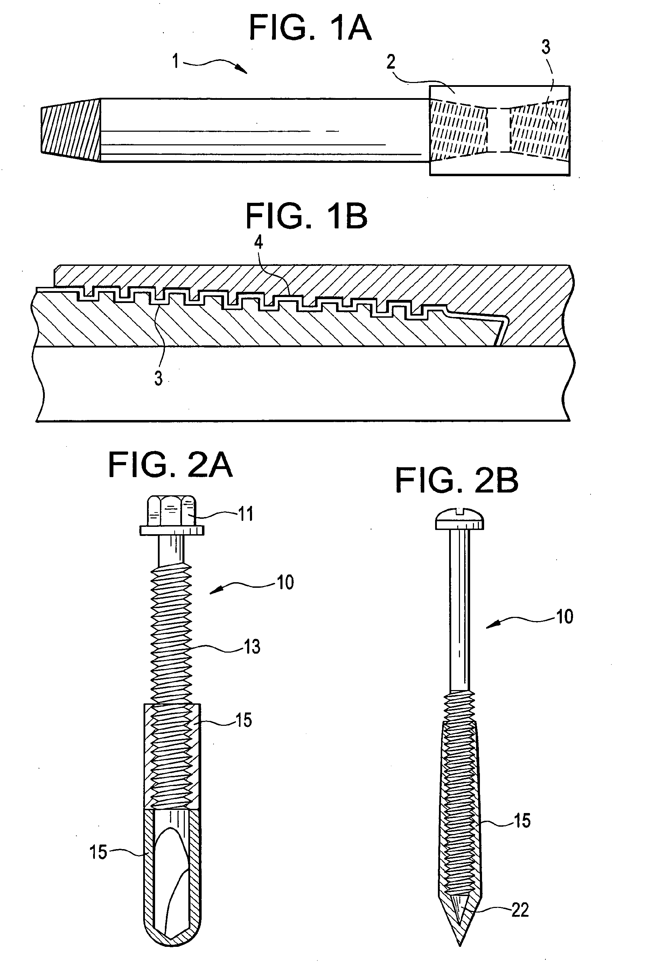

As used herein, the term "contact surface" refers to the surface area of the fastener to be fastened or in contact with the assembly, for example, the threaded surface 4 of a fastener such as in Figure 1B adapted for engagement with the surface 4 of a mating fastener assembly, e.g., a coupling or a nut, or the shank surface as well as the pointed surface (threaded or smooth) of a nail to be driven or screwed into a mating fastener assembly in the form of a building block.

The term "an effective amount," as used herein, means an amount of the anti-seizing composition sufficient, with less resistance, for the fastener to be secured tightly with another fastening member, driven or screwed into a hole in a work piece, e.g., a wood or concrete surface for receiving the fastener, or a female thread formation holding screw for receiving the threaded fastener such as a screw having a drill point.

The anti-seizing compositions of the invention can be in the form of a powder, a solid wand or stick, a gel, a grease, an oil, a wax, an adhesive, a lacquer or varnish, a spray paint/slurry distributed as an aerosol spray or a suspension, the suspension media being water, organic solvents, organic polymers, inorganic polymers, etc. In one embodiment, the composition is applied as a stick, a wand, or a lump, or a powder, forming a coating layer directly on the threaded fastener. The compositions comprise ingredients generally used in products of this type, a spray paint, etc., well known to those skilled in the art, provided that they do not interfere with the boron nitride as the anti-seizing key ingredient described herein.

Anti-Seizing Active Ingredient - Boron nitride: Boron nitrides (BN), which can be used in the anti-seizing composition of the invention, are commercially available from a number of sources, including but not limited to, BN materials from GE Advanced Materials, Sintec Keramik, Kawasaki Chemicals, and St. Gobain Ceramics.

The BN can be in one of the following forms, or mixtures thereof, including: amorphous boron nitride (referred to herein as a-BN), boron nitride of the hexagonal system, having a laminated structure of hexagonal-shaped meshed layers (referred to herein as h-BN), a turbostratic boron nitride, having randomly-layered hexagonal-shaped meshed layers (referred to herein as t-BN). In one embodiment, the BN is in the form of turbostratic form, hexagonal form, or mixtures thereof.

In one embodiment, the BN particles have an average particle size of less than 100 µm. In a second embodiment, less than 50 µm. In a third embodiment, in the range of 10 to 30 µm. In a fourth embodiment, having a primary average particle size of less than 20 µm. In a fifth embodiment, the boron nitride has a primary average particle size ranging from 0.5 to 100 µm. In a sixth embodiment, the boron nitride has a primary average particle size ranging from 2 to 60 µm.

In one embodiment, the BN is surface-treated ("coated") to further impart lubricating characteristics to the ingredient. Examples of surface coating materials for the boron nitride powder include, but are not limited to, isohexadecane, liquid paraffin, nonionic surfactants, dimethylpolysiloxane (or dimethicone), a mixture of completely methylated, linear siloxane polymers which have been terminally blocked with trimethylsiloxy units, a silazane compound possessing perfluoroalkyl groups, a zirconate coupling agent, a zirconium aluminate coupling agent, an aluminate coupling agent, and mixtures thereof.

Anti-seizing Composition. The BN anti-seizing composition is applied in various forms, including, but not limited to, a boron nitride containing paint, a boron nitride containing lacquer, a boron nitride containing grease, a boron nitride thermal spray, a boron nitride stick or wand, a boron nitride containing cream, a boron nitride containing oil, and neat boron nitride powder. In one embodiment as illustrated in Figures 2A and 2B, the composition is applied onto the threaded portion of the fastener 10, partially covering at least 10% of the length of the shank or threaded portion with a coated portion 15. In a second embodiment, the composition is applied onto the shank portion of a fastener such as a nail (not illustrated), partially covering at least 20% of surface of the shank portion or threaded portion. In a third embodiment, at least 40% of the surface of a fastener is coated. In a fourth embodiment, at least 60% of the surface of the shank or the threaded portion is coated.

In another embodiment, the composition is only applied on the drill point 22 of the fastener, such as a screw or a fluted shank nail of Figures 2A-2B. In yet another embodiment, the entire surface, except the formed head of the fastener, is coated. In a fifth embodiment, the composition is applied leaving a coating of boron nitride powder of a thickness of 2 to 500 µm on the shank surface or threaded portion. In yet another embodiment, the coating layer containing boron nitride on the shank surface or threaded portion has a thickness of 10 to 100 µm.

In embodiments such as a paint, a lacquer, a grease, a cream, etc., the boron nitride anti-seizing material is mixed with a binder or carrier material, e.g., a water-soluble binder, organic-soluble binder, aqueous emulsion, paraffin, a liquid silicone, oil, etc. There is no special limitation to the binder material usable in the anti-seizing composition, so long as it does not interfere with the anti-seizing ability of the BN agglomerate/powder and has the retaining properties and binding abilities necessary for the agglomerate/powder. Examples of the binder materials include, but are not limited to, polyvinyl alcohol, polyvinyl pyrrolidone, polyethylene glycol, etc. In one embodiment, the ratio of boron nitride as the anti-seizing ingredient to the binder is such that the mass ratio of the boron nitride to binder is in the range of 0.3 to 9.0. In a second embodiment, the ratio is in the range of 0.5 to 8.0. In a third embodiment, the ratio is from 1.0 to 7.0. The combination and percentages of the binders are not critical, but the amounts and combinations should not be so large as to interfere with anti-seizing ability of the boron nitride, as noted above.

In one embodiment, e.g., a form of a thermal spray, the anti-seizing composition further comprises additives such as matrix-forming metal alloy is selected from the group of Ni, Co, Cu, Fe, Al, and combinations and alloys thereof, in a ratio of 1:6 to 9:1, by weight of boron nitride to the metal alloys.

The total amount of boron nitride in the finished anti-seizing formulation may be varied within wide parameters, but should be in an amount sufficient for the composition to have a coating layer containing boron nitride on the shank or the threads of the fastener, allowing the fastener to be easily driven into a surface, or screwed into a mating component (a screw or a nut) or a holding platform (e.g., wood, cement, metal surface) with no seizing, stoppage, or little resistance. This is the anti-seizing amount. Generally, in one embodiment, the anti-seizing effective amount of boron nitride is in the range of 0.1 to 99.9 wt.%, based on the total weight of the anti-seizing formulation In another embodiment, from 1 to 95 wt. %. In a second embodiment, the amount ranges from 2 wt. % to 75 wt. %. In a third embodiment, from 5 wt. % to 50 wt. %. In a fourth embodiment, this amount is less than 15 wt. %. In a fifth embodiment, this amount ranges from 5 to 30 wt. %.

In addition to the boron nitride component as the principal anti-seizing ingredient and optionally at least one binder / carrier component, depending on the form of the application (grease, lacquer, etc.), the composition can also contain a variety of additives known in the art, including, but not limited to, agitants, dyes, colorants, preserving agents, other co-lubricants such as MoS2, graphite or PTFE, corrosion inhibitors, or etc.

In one embodiment for use with nails as fasteners, i.e., for driving nails such as smooth nails or fluted shank nails, the composition further comprises up to 50% of cubic boron nitride (cBN) for a composition which makes the nails easier to drive (anti-seizing effect from the hBN) but also with increased holding power and strength (from the cBN). In a second embodiment, the amount of cBN is in the range of 2 to 40 wt. % of the total "boron nitride" composition. In a third embodiment, the amount of cBN is between 5 to 30 wt. % of the total BN composition. In a fourth embodiment, in addition to or in place of cBN, the anti-seizing composition further comprises at least one ingredient of talc, glass fiber, and milled glass in an amount of 2 to 50 wt. % of the total anti-seizing composition. In a fifth embodiment, the composition comprises 5 to 10 wt. % of at least one ingredient of talc, glass fiber, and milled glass.

1^{st} Embodiment - Anti-seizing Powder: In one embodiment, the anti-seizing composition contains boron nitride particles. Examples include BN powder comprising agglomerates of hBN platelets, with an agglomerate size distribution of from about 10 to about 125 µm. In another embodiment, the anti-seizing powder composition consists essentially of hBN platelets having an aspect ratio of from about 10 to about 300. In a third embodiment, the anti-seizing powder composition consists essentially of hBN particles having an oxygen content from 0.2 to 2.5 wt %. In a fourth embodiment, the anti-seizing powder composition consists essentially of hBN particles having a graphitization index of less than 7.

2^{nd} Embodiment - Anti-seizing Liquid: In one embodiment, the anti-seizing composition is in the form of a boron nitride liquid, e.g., a BN paint with high lubricity as well as good adherence to the threaded surface of the fastener, leaving a dried composition containing boron nitride. In one embodiment, the boron nitride anti-seizing composition is in the form of a BN paint containing 50-100 parts by weight of BN; 25-75 parts by weight of acrylic such as vinyl acrylic; and 100-200 parts by weight of a volatile liquid, such as an alcohol.

In one embodiment, the anti-seizing compound is in the form of a BN lacquer, e.g., in a binder of a film-forming substance such as a nitro lacquer, a solution of nitrocellulose in amylacetate. In a second embodiment, the anti-seizing lacquer comprises an organosilane compound as a binder, e.g., a solgel material, are usually made by hydrolysis of silanes forming Si-OH groups, which are coupled towards Si-O-Si bonds upon curing. In a third embodiment, the anti-seizing lacquer composition comprises BN powder in an aqueous binding agent mixture comprising a water dilutable resin, such as a modified polyester, and a water miscible hydroxyurethane. In a fourth embodiment, the anti-seizing lacquer composition comprises boron nitride in a binder of dispersant methyl methacrylate polymers and a graft copolymer.

The BN anti-seizing composition can be applied in a liquid form directly to the shank or the threaded surface using a conventional liquid application technique such as washing, brushing, or spraying using an aerosol can, a sprayer, or the like. In yet another embodiment, a fastener such as a screw, a straight nail, or a fluted nail is dipped into a bath of boron nitride paint or lacquer for a sufficient amount of time for a coating containing BN to cover the threaded surface. The fastener is removed from the dipping bath, wherein the BN composition dries out forming an anti-seizing coating.

Anti-seizing compositions in a form similar to BN paints can be obtained commercially from a number of sources, including GE Advanced Materials of Strongsville, OH.

3^{rd} Embodiment - Anti-seizing BN Block: In one embodiment, the anti-seizing composition is in the form of a wand, a stick, or a block. In applications, the block is rubbed against the shank or the threaded surface of the fastener (or vice versa, for the threaded screwed to be rubbed against the block), leaving a residue coating consisting essentially of boron nitride.

In one embodiment, the solid block contains 5-99 wt. % boron nitride, optional lubricants including molybdenum disulfide of 0-50 wt. %, calcium carbonate of 5-50 wt. %, optional minerals including mica, sericite, and talc in 0 to 30 wt %.

In yet another embodiment, the anti-seizing composition employs BN as the primary solid component, for a block comprising 0-99.9 wt. % of h-BN, 0 to 99 wt. % of t-BN. In one embodiment, the block is formed using the following process: a mixture of high oxygen t-BN and optional carbon additive is first cold pressed via a known method such as uniaxial pressing, filter pressing, or isostatic pressing, then heated to a temperature of 1500-2300 °C for 1 to 40 hrs., forming a block of sintered BN, having a density ranging from 0.20 to 1.50 g/cm³

In yet another embodiment, the anti-seizing block employs synthetic wax, paraffin, or an organophosphate such as triphenyl phosphate as a carrier. The BN anti-seizing component is added to the melted liquid carrier, then the mixture thus formed is poured into molds, where the mixture is allowed to cool and the carrier allowed to solidify. The molds can produce a bar or other desired shape. Optionally, the melted mixture can be poured into a mold and compressed at pressures between 250 to 1500 psig.

In another embodiment, the anti-seizing block employs synthetic or natural wax, paraffin, or an organophosphate such as triphenyl phosaphate as a carrier. The BN anti-seizing component is dry blended with the carrier component, using a v-blender, and the dry mixture is charged into a mold heated to 250°F and pressed at a pressure of between 250 and 1500 psig, cooled to room temperature, and de-moulded to form a bar or other desired shape.

4^{th} Embodiment - Anti-seizing Grease or Oil: In one embodiment, the anti-seizing composition is in the form of a grease (or oil), which can be applied onto the shank or threaded surface of the fastener via dipping, brushing, etc.

In one embodiment, the anti-seizing composition is in the form of a grease, containing 1-30 wt. % of the boron nitride active ingredient in a carrier of a mineral or synthetic oil. The grease composition in one embodiment further comprises at least one of a mineral thickener, such as acetylene black, talc, clay or silica, or a lithium soap, aluminium soap, other metal complex soaps, or polyurea in an amount of 2 to 30 wt. %.

The anti-seizing lubricant comprising BN can be made by processes known in the art, i.e., with the mixture being blended at room temperature. In one embodiment and depending on the binder(s) used, the mixture can be further treated by curing at a temperature between 200° to 500°C from about 5 minutes to 24 hours.

5^{th} Embodiment-Anti-seizing Thermal Spray: In one embodiment, particularly for applications on large sized threaded joints, such as pipe joints for oil well drilling and the like, the composition is in the form of a thermal spray.

In one example of an anti-seizing thermal spray, the spray comprises 50 wt. % BN in a matrix-forming metal alloy of NiCrAl. The thermal spray is applied onto the threaded surface of the fasteners using a combustion or plasma or electric arc to produce the heat for melting of the composition in powder form onto the threaded parts. The composition, besides its anti-seizing characteristics, further provides structural strength to threaded parts to at least an operating temperature of 815°C.

The invention is further illustrated by the following non-limiting examples:

Example 1 - BN Anti-seizing Block A mixture comprising 29.4 wt. % h-BN powder with an oxygen content of 0.3 wt % (grade AC6004 from GE Advanced Materials), and 68.6 wt. % of t-BN with an oxygen content of 15 wt %, and 2 wt. % of carbon black (grade N991 from Cancarb) is homogenously blended together. The blend is pressed in a uniaxial press to form a billet. The billet is cut into a plurality of blocks. The blocks are then sintered for 10-30 hours at 1700-2300°C, forming low-density BN blocks with density ranging from 0.20 to 1.5 g/cm3, and with a fired O₂ concentration of <1.0 wt %.

Example 2 - Application with a Threaded Joint for Steel Pipe: In this example, a threaded joint for a steel pipe as illustrated in Figures 1A and 1B. The pipe has an outer diameter of 7 inches (178 mm), and a wall thickness of 0.408 inches (10.4 mm). Aerosol BN paint, commercially available from GE Advanced Materials (as BN Spray II), is sprayed onto the threaded surface 3 of the pipe. The male threaded portion of the pipe 1 is screwed into the female coupling 2. The test is carried out with a fastening speed of 10 rpm. In repeated fastening and loosening tests (5 times at ambient temperature), there is no occurrence of seizing or galling while fastening and loosening is repeated.

In a comparable example using a threaded pipe that is not coated with the anti-seizing composition of the invention, seizing occurs half-way through the threading.

Example 3 - Application with a Threaded Screw: In this example, a threaded screw 10 as illustrated in Figure 2A is employed in a test. Almost half of the surface of the threaded portion 13 and the entire surface of the drill point is coated with a layer of BN paint 15. The aerosol BN paint is commercially available from GE Advanced Materials as BN Spray II. An electric screwdriver is used to drive screw 10 into a wooden bench. The screw goes in all the way without seizing and / or breaking.

In a comparable example with a similar screw without any BN anti-seizing coating, the electric screwdriver slips off the screw head 11 when seizing occurs, and the screw stops half-way without proceeding any further. In some cases, the uncoated screws twist and break in two pieces.

Example 4- BN coating application: Screws are inserted in a fixture to prevent the head of the screw from being coated with BN. The threads of the screw are coated using a water-based BN paint in a paint sprayer. The paint contains 9.4% h-BN, 5.1% aluminum oxide, and 1.6% bentonite clay, with the remainder of the composition present as water. The fixture is turned so that an even coating is applied over the threaded surface. The coating is applied at a thickness of 1-2 mil. An electric screwdriver is then used to drive the screws into a wooden bench. The screws go in all the way without seizing and / or breaking.

Example 5-BN coating application Smooth nails are inserted in a fixture to prevent the heads of the nails from being coated with BN. The shanks of the nails are coated using a BN aerosol spray paint. In the dried form, the paint contains 58% h-BN and 42% organoclay binder. A hammer is used to manually drive the nails into a wooden bench. The nails go in all the way, at least 10% quicker than nails without BN coating, using the same force on the hammer.

Example 7 - Application by electrostatic coating: In this example, the screw has an electrical potential applied to the screw, which is sufficiently different from the BN powder dispensing equipment, thus causing the BN powder to be attracted to the screw surface. The composition being dispensed also contains a binder at a level of 0.5 - 20 wt %. Optionally, the composition may be thermally treated to secure it onto the screw.

Example 8 - Application by flow coating or dip coating: Fluted shank nails are dipped into a suspension of BN powder in a volatile solvent system containing a dissolved polymer. A stirred suspension BN powder is prepared at a loading of 40-50 wt % in a mixture of acetone / low molecular weight crystal polystyrene, at a ratio of 40:60 by weight. The nails are either dipped into this mixture or placed in a fixture and the mixture is flow coated over the fluted shank region.

Example 9 - Application using neat BN powder: A portion of BN powder is placed into a suitable container, such as a bag or box, and a plurality of spiral shank nails are added. The entire apparatus is then vigorously agitated such that the BN powder falls onto the spiral threaded area of the nails. An electric screwdriver is then used to drive the spiral shank nails into a wooden bench. The nails go in all the way without seizing and / or breaking.

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims, if they have structural elements that do not differ from the literal language of the claims, or if they include equivalent structural elements with insubstantial differences from the literal languages of the claims.

All citations referred herein are expressly incorporated herein by reference.

## Claims

1. A fastener having a shank or a threaded portion having a contact surface adapted for engagement with a mating assembly, the fastener is **characterized in that**
at least 10% of the contact surface of the shank or the threaded portion being coated with an anti-seizing composition comprising 0.1 to 99.9 wt. % boron nitride,
the anti-seizing composition leaving a coating layer containing boron nitride on the coated contact surface.

2. The fastener of claim 1, wherein at least 20% of the surface of the shank or the threaded portion is coated with the anti-seizing composition.

3. The fastener of claim 1, wherein at least 40% of the surface of the shank or the threaded portion is coated with the anti-seizing composition.

4. The fastener of claim 1, wherein at least 60% of the surface of the shank or the threaded portion is coated with the anti-seizing composition.

5. The fastener of any of claims 1 - 4, wherein the anti-seizing composition comprises 1 to 95 wt. % boron nitride.

6. The fastener of any of claims 1 - 5, wherein the anti-seizing composition comprises 1 to 75 wt. % boron nitride.

7. The fastener of any of claims 1 - 6, wherein the anti-seizing composition comprises 2 to 75 wt. % boron nitride.

8. The fastener of any of claims 1 - 7, wherein the anti-seizing composition comprises 5 to 50 wt. % boron nitride.

9. The fastener of any of claims 1 - 8, wherein the anti-seizing composition comprises boron nitride having a primary average particle size ranging from 0.5 to 125 µm.

10. The fastener of any of claims 1-9, wherein the anti-seizing composition comprises 5 to 50 wt. % boron nitride having a primary average particle size ranging from 2 to 60 µm.

11. The fastener of any of claims 1-10, in the form of a screw, a nail, a staple, a nut, a coupling, or a threaded joint.

12. The fastener of any of claims 1 - 11, in the form of a fluted shank nail, a spiral shank nail, or a rink shank nail.

13. The fastener of any of claims 1 - 12, wherein the shank or a threaded portion has a pointed end, and wherein the pointed end is coated with the anti-seizing composition.

14. The fastener of any of claims 1 - 13, wherein the anti-seizing composition leaves a coating layer having a thickness of 2 to 500 µm on the coated contact surface.

15. The fastener of any of claims 1 - 14, wherein the anti-seizing composition leaves a coating layer having a thickness of 10 to 100 µm on the coated contact surface.

16. The fastener of any of claims 1 - 15, wherein the anti-seizing composition is one of a gel, a grease, an oil, a powder, a solid stick, a thermal spray, an organic or aqueous suspension or dispersion, and a paint.

17. The fastener of any of claims 1 - 16, wherein the anti-seizing composition is a paint containing 50-100 parts by weight of boron; 25-75 parts by weight of an acrylic; and 100-200 parts by weight of a volatile liquid.

18. The fastener of any of claims 1 - 17, wherein the anti-seizing composition is a grease comprising 1-30 wt. % of boron nitride in a carrier of a mineral or synthetic oil.

19. A method for securing a fastener into a mating assembly, the fastener having a shank or a threaded portion having a contact surface adapted for engagement with the mating assembly, the method comprises the step of
coating at least a portion of the contact surface with a sufficient amount of a composition containing 0.1 to 99.9 wt. % boron nitride, for the composition to leave a layer containing boron nitride on the coated contact surface to prevent the fastener from seizing when it is secured in the assembly.

20. The method of claim 19, wherein the fastener is in the form of a screw, a nail, a staple, a nut, a coupling, and a threaded joint.

21. The method of any of claims 19-20, wherein the anti-seizing composition is in the form of a gel, a grease, an oil, a powder, a solid stick, a thermal spray, an organic or aqueous suspension or dispersion, or a paint.

22. The method of any of claims 19 - 21,wherein the anti-seizing composition is a paint containing 50-100 parts by weight of boron; 25-75 parts by weight of an acrylic; and 100-200 parts by weight of a volatile liquid.

23. The method of any of claims 19 - 22,wherein the method of coating the at least a portion of the contact surface comprises coating the threaded portion of the fastener with a composition comprising 5 to 50 wt. % boron nitride.
